# EUROPÄISCHE PATENTSCHRIFT

(11) **EP 3 810 545 B1**
(45) Veröffentlichungstag und Bekanntmachung des Hinweises auf die Patenterteilung: **14.05.2025**
(21) Anmeldenummer: 19729273.3
(22) Anmeldetag: 06.06.2019
(51) Int. Cl.: C01B 3/00, B01J 19/24, C07C 45/00

(54) **VERFAHREN ZUM DEHYDRIEREN EINES WASSERSTOFFTRÄGERMEDIUMS**
PROCESS FOR THE DEHYDROGENATION OF A CARRIER MEDIUM OF HYDROGEN
PROCÉDÉ DE DÉSHYDROGÉNATION D'UN MILIEU PORTEUR D'HYDROGÈNE

(30) Priorität: 22.06.2018 DE 102018210247; 25.06.2018 DE 102018210337
(43) Veröffentlichungstag der Anmeldung: 28.04.2021
(73) Patentinhaber: HYDROGENIOUS LOHC TECHNOLOGIES GMBH, 91058 Erlangen (DE)
(72) Erfinder: BÖSMANN, Andreas, 91093 Hessdorf (DE); PREUSTER, Patrick, 91180 Heideck (DE); WASSERSCHEID, Peter, 91054 Erlangen (DE); GEBURTIG, Denise, 90489 Nürnberg (DE)
(74) Vertreter: Rau, Schneck & Hübner Patentanwälte Rechtsanwälte PartGmbB
(86) Internationale Anmeldenummer: PCT/EP2019/064819
(87) Internationale Veröffentlichungsnummer: WO 2019/243073

(56) Entgegenhaltungen:
- JP-A- 2015 030 653
- US-A1- 2017 166 496
- US-A1- 2018 093 889
- FERREIRA-APARICIO P ET AL: "On the Performance of Porous Vycor Membranes for Conversion Enhancement in the Dehydrogenation of Methylcyclohexane to Toluene", JOURNAL OF CATALYSIS, ACADEMIC PRESS, DULUTH, MN, US, vol. 212, no. 2, 10 December 2002 (2002-12-10), pages 182 - 192, XP027233544, ISSN: 0021-9517, [retrieved on 20021210]
- GANG LI ET AL: "Highly enhanced ammonia decomposition in a bimodal catalytic membrane reactor for CO-free hydrogen production", CATALYSIS COMMUNICATIONS, ELSEVIER, AMSTERDAM, NL, vol. 15, no. 1, 10 August 2011 (2011-08-10), pages 60 - 63, XP028322240, ISSN: 1566-7367, [retrieved on 20110818], DOI: 10.1016/J.CATCOM.2011.08.011
- GEBURTIG DENISE ET AL: "Chemical utilization of hydrogen from fluctuating energy sources - Catalytic transfer hydrogenation from charged Liquid Organic Hydrogen Carrier systems", INTERNATIONAL JOURNAL OF HYDROGEN ENERGY, ELSEVIER SCIENCE PUBLISHERS B.V., BARKING, GB, vol. 41, no. 2, 7 November 2015 (2015-11-07), pages 1010 - 1017, XP029387439, ISSN: 0360-3199, DOI: 10.1016/J.IJHYDENE.2015.10.013

## Beschreibung

Die vorliegende Patentanmeldung nimmt die Prioritäten der deutschen Patentanmeldungen DE 10 2018 210 337.2 und DE 10 2018 210 247.3 in Anspruch.

Die Erfindung betrifft ein Verfahren zum Dehydrieren eines Wasserstoffträgermediums.

US 2018/0093889 A1 offenbart ein flüssiges Wasserstoffspeichermedium und ein Verfahren zum Speichern von Wasserstoff.

JP 2015-030 653 A offenbart ein System und ein Verfahren zur Energienutzung aus Kohlenstoffdioxid.

US 2017/0166496 A1 offenbart ein Hydriersystem für aromatische Verbindungen.

Wasserstofffreisetzung aus einem Trägermaterial mittels einer Membran ist bekannt aus den Fachartikeln Ferreira-Aparicio P. et al.: "On the Performance of Porous Vycor Membranes for Conversion Enhancement in the Dehydrogenation of Methylcyclohexane to Toluene", Journal of Catalysis, 212, 182-192 (2002) und Gang Li et al.: "Highly enhanced ammonia decomposition in a bimodal catalytic membrane reactor for CO-free hydrogen production", Catalytics Communications, 15 (2011) 60-63.

Die chemische Nutzung von Wasserstoff aus schwankenden Energiequellen ist aus dem Fachartikel Geburtig, D. et al.: "Chemical utilization of hydrogen from fluctuating energy sources - Catalytic transfer hydrogenation from charged Liquid Organic Hydrogen Carrier Systems", International Journal of Hydrogen Energy, 41 (2016) 1010 bis 1017 bekannt.

Ein Trägermedium zum chemischen Binden von Wasserstoff ist aus der EP 1 475 349 A2 bekannt.

Das Wasserstoffträgermedium ist ein flüssiges organisches Hydrid, das als Liquid Organic Hydrogen Carrier (LOHC) bezeichnet wird. LOHC kann mit Wasserstoff beladen, also hydriert werden. In der hydrierten Form ist der Wasserstoff an dem Wasserstoffträgermedium chemisch gebunden. Das Trägermedium ist in einem beladenen Zustand. Insbesondere kann LOHC reversibel mit Wasserstoff beladen und von Wasserstoff wieder entladen werden. Die physikochemischen Eigenschaften des LOHC haben hohe Ähnlichkeit zu herkömmlichen flüssigen Kraftstoffen, sodass Pumpen und Tankfahrzeuge zum Transport und Behälter zur Lagerung von LOHC aus dem Bereich der Kraftstoff- und Brennstofflogistik genutzt werden können. Die Wasserstoffspeicherung in chemisch gebundener Form in einer organischen Flüssigkeit erlaubt eine drucklose Lagerung bei Normalbedingungen über große Zeiträume ohne signifikanten Wasserstoffverlust. Als LOHC sind aromatische Verbindungen mit mindestens einem π-Elektronensystem bekannt, die in einer katalytischen Hydrierung in die jeweiligen gesättigten, alizyklischen Verbindungen überführt werden. Als LOHC dient beispielsweise Dibenzyltoluol und Benzyltoluol als Reinstoffe, isomere Gemische oder Mischungen dieser Substanzen miteinander. Als LOHC können auch polyzyklische, heteroaromatische Verbindungen mit mindestens einem π-Elektronensystem dienen, die durch Hydrierung in die jeweiligen gesättigten, polyzyklischen Verbindungen überführt werden, die Heteroatome wie Stickstoff oder Sauerstoff enthalten. Insbesondere dienen als LOHC N-Ethylcarbazol, N-Propylcarbazol, N-Isopropylcarbazol, N-Butylcarbazol oder Mischungen dieser Substanzen. Als LOHC sind auch Oligomere oder Polymere mit ausgedehnten π-konjugierten Elektronensystemen möglich, die durch Hydrierung in die jeweiligen gesättigten Verbindungen überführt werden. Für die Freisetzung des Wasserstoffs erfolgt ein Dehydrieren des Wasserstoffträgermediums, also LOHC, unter Zuführung von Wärme und in Gegenwart eines Katalysators, wobei das LOHC in die entladene Form überführt wird. Bei der Entladung des LOHC wird Wasserstoff durch eine katalysierte Dehydrierreaktion aus einem organischen Molekül oder aus einer Mischung organischer Moleküle freigesetzt. Das bedeutet, dass die Freisetzung des Wasserstoffs durch eine stoffliche Umwandlung des zumindest teilweise beladenen Wasserstoffträgermediums in einem Reaktionsbehälter mittels katalysierter Dehydrierreaktion erfolgt.

Es hat sich gezeigt, dass die Freisetzungsrate, also die Menge an freigesetztem Wasserstoff je Zeiteinheit, mit den aus dem Stand der Technik bekannten Verfahren beschränkt ist. Das Dehydrieren des Wasserstoffträgermediums gemäß dem Stand der Technik ist daher bei Temperaturen unterhalb von 250 °C unwirtschaftlich. Eine technisch nutzbare Freisetzungsrate von mindestens 10 Normliter Wasserstoff pro Liter Katalysatorvolumen und Minute kann bei den Verfahren gemäß dem Stand der Technik nur dann erreicht werden, wenn die Reaktionstemperatur mehr als 250 °C beträgt.

Der Erfindung liegt die Aufgabe zugrunde, das Freisetzen von Wasserstoff aus einem Wasserstoffträgermedium unter wirtschaftlichen Gesichtspunkten zu verbessern, sodass Wasserstoff insbesondere mit einer erhöhten Freisetzungsrate und insbesondere bei reduzierten Temperaturen freigesetzt wird.

Die Aufgabe wird durch die Merkmale des Anspruchs 1 gelöst. Der Kern der Erfindung besteht darin, dass zum Dehydrieren eines zumindest teilweise beladenen Wasserstoffträgermediums zusätzlich zu einem metallhaltigen Katalysatormaterial eine metallfreie Reaktionsbeschleunigersubstanz verwendet wird. Das Wasserstoffträgermedium ist insbesondere LOHC und insbesondere heteroatomfrei. Das LOHC besteht insbesondere ausschließlich aus Kohlenstoffatomen und Wasserstoffatomen. Es wurde gefunden, dass heteroatomfreie LOHC-Substanzen gegenüber Substanzen mit Heteroatomen wie Stickstoff oder Bor vorteilhaft sind. Heteroatomfreie LOHC-Substanzen sind den heute verwendeten Kraftstoffen chemisch sehr ähnlich, sodass die Infrastruktur für den Kraftstofftransport, die Kraftstofflagerung und die Kraftstoffverteilung für den Transport, die Lagerung und die Verteilung der LOHC-Substanz genutzt werden kann. Insbesondere sind die heteroatomfreien LOHC-Substanzen besser verfügbar und kosteneffizient erhältlich, da diese Substanzen unmittelbar aus petrochemischen Grundchemikalien gewonnen werden können. Die heteroatomfreien Trägermedien weisen nicht den Nachteil auf, dass in der wasserstoffentladenen Form der Schmelzpunkt über Raumtemperatur liegt, wodurch die Nutzung der LOHC-Systeme für technische Anwendungen erschwert würde.

Die heteroatomfreie LOHC-Substanz Dibenzyltoluol besitzt beispielsweise einen Schmelzpunkt von unter -35 °C. Die heteroatomhaltige LOHC-Substanz N-Ethylcarbazol weist einen Schmelzpunkt von 70 °C auf.

Die thermische Stabilität der heteroatomfreien Wasserstoffträgermedien ist gegenüber den heteroatomhaltigen Trägermedien aufgrund der vergleichsweise stabileren Kohlenstoff-Kohlenstoff-Bindungen erhöht. Die unerwünschten thermischen Zersetzungsreaktionen sind bei dem heteroatomfreien Wasserstoffträgermedium reduziert.

Als metallhaltige Katalysatoren eignen sich insbesondere Katalysatoren, welche die Elemente Platin, Palladium und/oder Nickel enthalten. Es sind auch Katalysatoren möglich, die andere oder zusätzliche Elemente aufweisen wie Rhodium, Iridium, Gallium, Chrom, Eisen, Kobalt und/oder Kupfer. Wesentlich ist, dass die verwendeten metallhaltigen Katalysatoren die Fähigkeit haben, LOHC-gebundenen Wasserstoff zu aktivieren, ihn auf die metallfreie Reaktionsbeschleunigersubstanz zu übertragen und von dort als elementaren Wasserstoff freizusetzen. Der metallhaltige Katalysator ist sowohl zum Transferhydrieren als auch zum Dehydrieren geeignet. Zum Dehydrieren wird das zumindest teilweise beladene Wasserstoffträgermedium mit dem metallhaltigen Katalysator und der metallfreien Reaktionsbeschleunigersubstanz insbesondere direkt kontaktiert. Das Kontaktieren kann in einem einzigen Reaktionsbehälter stattfinden, in dem die drei Komponenten, also das Wasserstoffträgermedium, der Katalysator und die Reaktionsbeschleunigersubstanz, vorliegen. Das Kontaktieren kann auch schrittweise in mehreren, insbesondere hintereinander geschalteten Reaktionsbehältern erfolgen. Wasserstoff wird von dem Wasserstoffträgermedium auf die Reaktionsbeschleunigersubstanz insbesondere unmittelbar übertragen. Alternativ kann der Wasserstoff auch in atomarer Form von dem Wasserstoffträgermedium auf die Reaktionsbeschleunigersubstanz übertragen. Die metallfreie Reaktionsbeschleunigersubstanz hat die Fähigkeit, in Gegenwart eines metallhaltigen Katalysators Wasserstoff aufzunehmen. Die metallfreie Reaktionsbeschleunigersubstanz hat auch die Fähigkeit, den aufgenommenen Wasserstoff bei vergleichsweise geringen Temperaturen schnell abzugeben, um damit Wasserstoffgas freizusetzen.

Die metallfreie Reaktionsbeschleunigersubstanz liegt insbesondere zunächst in einer wasserstoffabgereicherten Form vor. Durch die Reaktion mit dem beladenen Wasserstoffträgermedium in Gegenwart des metallhaltigen Katalysators wird die metallfreie Reaktionsbeschleunigersubstanz in eine wasserstoffangereicherte Form überführt. Insbesondere unterscheidet sich die wasserstoffangereicherte Form der metallfreien Reaktionsbeschleunigersubstanz von dem zumindest teilweise beladenen Wasserstoffträgermedium. Insbesondere unterscheidet sich die wasserstoffabgereicherte Form der metallfreien Reaktionsbeschleunigersubstanz von dem zumindest teilweise entladenen Wasserstoffträgermedium. Insbesondere sind die metallfreie Reaktionsbeschleunigersubstanz und das Wasserstoffträgermedium zwei verschiedene und insbesondere zwei voneinander getrennte Stoffsysteme. Bei dem erfindungsgemäßen Verfahren wird Wasserstoff von dem zumindest teilweise beladenen Wasserstoffträgermedium, also von einem ersten Stoffsystem, auf die wasserstoffabgereicherte Form der metallfreien Reaktionsbeschleunigersubstanz, also auf ein zweites Stoffsystem, übertragen, das sich von dem ersten Stoffsystem unterscheidet. Anschließend wird Wasserstoffgas, das insbesondere zuvor auf die metallfreie Reaktionsbeschleunigersubstanz in der wasserstoffabgereicherten Form übertragen worden ist, von der wasserstoffangereicherten Form der Reaktionsbeschleunigersubstanz freigesetzt. Die Reaktionsbeschleunigersubstanz unterscheidet sich von dem Wasserstoffträgermedium.

Wesentlich ist, dass die wasserstoffangereicherte Form der Reaktionsbeschleunigersubstanz Wasserstoff als elementares Wasserstoffgas bei niedrigen Temperaturen und/oder höheren Drücken abgeben kann als das Wasserstoffträgermedium bei art- und mengengleichem metallhaltigem Katalysator. Durch den erfindungsgemäßen Zwischenschritt, dass Wasserstoff vor dem Freisetzen zunächst von dem Wasserstoffträgermedium auf die Reaktionsbeschleunigersubstanz übertragen wird, wurde der Gesamtenergieaufwand bei dem Verfahren zum Freisetzen von Wasserstoff reduziert, da die Freisetzung von Wasserstoffgas bei einer niedrigeren Temperatur stattfinden kann.

Erfindungsgemäß wurde erkannt, dass die zusätzliche Verwendung der metallfreien Reaktionsbeschleunigersubstanz die Freisetzung von Wasserstoff bei reduzierten Reaktionstemperaturen mit erhöhter Freisetzungsrate, also erhöhter Reaktionsgeschwindigkeit, ermöglicht.

Es wurde erkannt, dass die Reaktionsgeschwindigkeit beim Dehydrieren eines Wasserstoffträgermediums von essentieller Bedeutung für die Wirtschaftlichkeit des Verfahrens ist, da eine Soll-Menge von freizusetzendem Wasserstoff bei einer geringen Freisetzungsrate einen größeren Reaktionsbehälter erfordern würde. Dadurch würden zusätzlicher Bauraumbedarf und zusätzliche Kosten entstehen. Dies kann erfindungsgemäß verhindert werden.

Liegt die Reaktionsbeschleunigersubstanz in der wasserstoffangereicherten Form in dem Reaktionsbehälter vor, so wird der Wasserstoff als elementarer Wasserstoff gasförmig von der wasserstoffangereicherten Reaktionsbeschleunigersubstanz im intensiven Kontakt mit dem zumindest teilweise beladenen Wasserstoffträgermedium und dem metallhaltigen Katalysator zunächst freigesetzt. Dabei wird die Reaktionsbeschleunigersubstanz in die wasserstoffabgereicherte Form überführt. Anschließend wird Wasserstoff von dem Wasserstoffträgermedium in Kontakt mit dem metallhaltigen Katalysator auf die wasserstoffabgereicherte Form der Reaktionsbeschleunigersubstanz übertragen, wobei sich die wasserstoffangereicherte Form der Reaktionsbeschleunigersubstanz bildet. Von der wasserstoffangereicherten Form der Reaktionsbeschleunigersubstanz wird erneut elementarer Wasserstoff gasförmig freigesetzt. Dieser Vorgang wiederholt sich idealerweise so lange, bis der gesamte freisetzbare Wasserstoff des beladenen Wasserstoffträgermediums als elementarer Wasserstoff gasförmig vorliegt.

Die beschriebenen Vorgänge finden insbesondere alle gleichzeitig im Reaktionsbehälter statt. Sie führen dazu, dass - im Vergleich zur Wasserstofffreisetzung ohne Reaktionsbeschleunigersubstanz - der Wasserstoff bei sehr viel niedrigeren Temperaturen und/oder sehr viel schneller, also mit einer erhöhten Freisetzungsrate, vom Wasserstoffträgermedium zu elementarem Wasserstoffgas gewandelt wird.

Die Verwendung einer Reaktionsbeschleunigersubstanz, die mindestens eine funktionelle Gruppe aufweist, die sauerstoff- und/oder stickstoffhaltig ist, hat sich als besonders geeignet erwiesen.

Verfahren gemäß den Ansprüchen 2 und 3 ermöglichen vorteilhafte Reaktionsbedingungen. Insbesondere ist die Reaktionstemperatur im Reaktionsbehälter gegenüber den aus dem Stand der Technik bekannten Verfahren reduziert. Zusätzlich oder alternativ kann der Wasserstoff bei vorgegebener Temperatur mit einer höheren Freisetzungsrate gewonnen werden.

Ein Verfahren gemäß Anspruch 4 gewährleistet eine technisch nutzbare Entladegeschwindigkeit bei reduzierten Reaktionstemperaturen. Insbesondere ist die technisch nutzbare Freisetzungsrate von mehr als 10 Normliter Wasserstoff pro Liter Katalysatorvolumen und Minute bei Temperaturen von weniger als 250°C, insbesondere von weniger als 220 °C, insbesondere von weniger als 200 °C, insbesondere von weniger als 180 °C und insbesondere von weniger als 150 °C möglich.

Eine Reaktionsbeschleunigersubstanz, die in der wasserstoffangereicherten Form sekundäre Alkohole in der allgemeinen Form 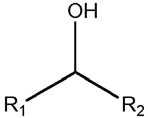 umfasst, hat sich als vorteilhaft erwiesen. Insbesondere sind R₁ und R₂ unabhängig voneinander lineare oder verzweigte Alkyl-, Aryl- oder Aralkylgruppen mit einem, mehreren oder in Polymerstrukturen sehr vielen Kohlenstoff-Atomen, die ihrerseits weitere Alkoholfunktionen, aber auch andere funktionelle Gruppen wie stickstoffhaltige Gruppen, phosphorhaltige Gruppen oder Halogenatome enthalten können. Außerdem können R₁ und R₂ insbesondere ringförmig miteinander verbunden sein, sodass es sich bei der wasserstoffangereicherten Form der metallfreien Reaktionsbeschleunigersubstanz um eine Cycloalkanol-Verbindung handelt. Die ringförmige Verbindung kann weitere Alkoholfunktionen, aber auch andere funktionelle Gruppen wie stickstoffhaltige Gruppen, phosphorhaltige Gruppen oder Halogenatome enthalten.

Eine entsprechende wasserstoffabgereicherte Form dieser Reaktionsbeschleunigersubstanz sind Keton-Verbindungen.

Als besonders vorteilhaft hat sich eine Reaktionsbeschleunigersubstanz erwiesen, die in der wasserstoffangereicherten Form Oligovinylalkohole in der allgemeinen Form 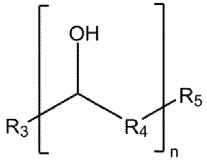 und/oder
Polyvinylalkohole in der allgemeinen Form 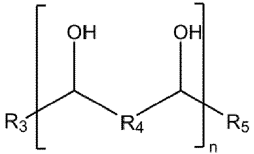 umfasst.

R₃ ist insbesondere eine lineare oder verzweigte Alkyl-, Aryl- oder Aralkylgruppe mit einem, mehreren oder in Polymerstrukturen sehr vielen Kohlenstoff-Atomen, die ihrerseits weitere Alkoholfunktionen, aber auch andere funktionelle Gruppen wie stickstoffhaltige Gruppen, phosphorhaltige Gruppen oder Halogenatome enthalten können.

R₄ ist insbesondere eine Gruppe der allgemeinen Formel -(CH₂-)ₙ mit n = 1 bis 100.

R₅ ist insbesondere unabhängig von R₃ eine weitere lineare oder verzweigte Alkyl-, Aryl- oder Aralkylgruppe mit einem, mehreren oder in Polymerstrukturen sehr vielen Kohlenstoff-Atomen, die ihrerseits weitere Alkoholfunktionen, aber auch andere funktionelle Gruppen wie stickstoffhaltige Gruppen, phosphorhaltige Gruppen oder Halogenatome enthalten können.

Als vorteilhafte Reaktionsbeschleunigersubstanz haben sich auch sekundäre Amine in der allgemeinen Form 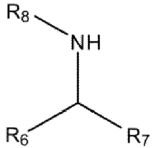 erwiesen.

Insbesondere sind R₆ und R₇ unabhängig voneinander lineare oder verzweigte Alkyl-, Aryl- oder Aralkylgruppe mit einem, mehreren oder in Polymerstrukturen sehr vielen Kohlenstoff-Atomen, die ihrerseits weitere Aminfunktionen, aber auch andere funktionelle Gruppen wie sauerstoffhaltige Gruppen, phosphorhaltige Gruppen oder Halogenatome enthalten können. Zusätzlich oder alternativ können R₆ und R₇ ringförmig miteinander verbunden sein, sodass es sich bei der wasserstoffangereicherten Form der Reaktionsbeschleunigersubstanz um eine Cycloamin-Verbindung handelt. Die ringförmige Verbindung kann weitere Aminfunktionen, aber auch andere funktionelle Gruppen wie sauerstoffhaltige Gruppen, phosphorhaltige Gruppen oder Halogenatome enthalten.

R₈ kann eine weitere lineare oder verzweigte Alkyl-, Aryl- oder Aralkylgruppe mit einem, mehreren oder in Polymerstrukturen sehr vielen Kohlenstoff-Atomen sein, die ihrerseits weitere Aminfunktionen, aber auch andere funktionelle Gruppen wie sauerstoffhaltige Gruppen, phosphorhaltige Gruppen oder Halogenatome enthalten können.

Die entsprechende wasserstoffabgereicherte Form dieser Reaktionsbeschleunigersubstanz sind Imin-Verbindungen.

Als weiterhin besonders bevorzugt hat sich eine Reaktionsbeschleunigersubstanz erwiesen, die in der wasserstoffangereicherten Form Oligovinylamine und/oder Polyvinylamine in der allgemeinen Form 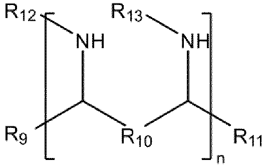 aufweist.

Insbesondere ist R₉ eine lineare oder verzweigte Alkyl-, Aryl- oder Aralkylgruppe mit einem, mehreren oder in Polymerstrukturen sehr vielen Kohlenstoff-Atomen, die ihrerseits weitere Aminfunktionen, aber auch andere funktionelle Gruppen wie sauerstoffhaltige Gruppen, phosphorhaltige Gruppen oder Halogenatome enthalten können.

R₁₀ ist insbesondere eine Gruppe der allgemeinen Formel -(CH₂-)ₙ mit n= 1 bis 100.

R₁₁ kann insbesondere eine weitere lineare oder verzweigte Alkyl-, Aryl-, oder Aralkylgruppe mit einem, mehreren oder in Polymerstrukturen sehr vielen Kohlenstoff-Atomen sein, die ihrerseits weitere Aminfunktionen, aber auch andere funktionelle Gruppen wie sauerstoffhaltige Gruppen, phosphorhaltige Gruppen oder Halogenatome enthalten können.

R₁₂ und R₁₃ können unabhängig voneinander jeweils eine weitere lineare oder verzweigte Alkyl-, Aryl-, oder Aralkylgruppe mit einem, mehreren oder in Polymerstrukturen sehr vielen Kohlenstoff-Atomen sein, die ihrerseits weitere Aminfunktionen, aber auch andere funktionelle Gruppen wie sauerstoffhaltige Gruppen, phosphorhaltige Gruppen oder Halogenatome enthalten können.

Als geeignet hat sich auch eine Reaktionsbeschleunigersubstanz erwiesen, die in der wasserstoffangereicherten Form eine dehydrierbare hetero-alizyklische Verbindung in der allgemeinen Form 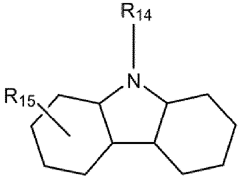 oder 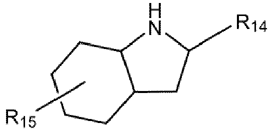 oder 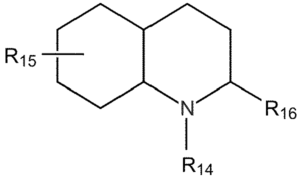 oder 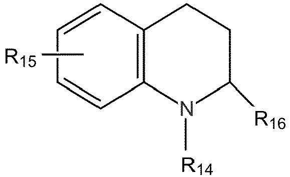 oder 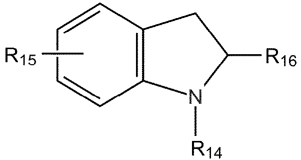 darstellt.

Insbesondere kann R₁₄ und/oder R₁₆ ein Wasserstoffatom, eine lineare oder verzweigte Alkyl-, Aryl-, oder Aralkylgruppe mit einem, mehreren oder in Polymerstrukturen sehr vielen Kohlenstoff-Atomen sein, die ihrerseits weitere Aminfunktionen, aber auch andere funktionelle Gruppen wie sauerstoffhaltige Gruppen, phosphorhaltige Gruppen oder Halogenatome enthalten können.

R₁₅ kann insbesondere eine oder mehrere an beliebiger Position am Ring angebrachte lineare oder verzweigte Alkyl-, Aryl-, oder Aralkylgruppe mit einem, mehreren oder in Polymerstrukturen sehr vielen Kohlenstoff-Atomen sein, die ihrerseits weitere Aminfunktionen, aber auch andere funktionelle Gruppen wie sauerstoffhaltige Gruppen, phosphorhaltige Gruppen oder Halogenatome enthalten kann oder eine sauerstoff-, stickstoff- oder phosphorhaltige funktionelle Gruppe oder ein Halogenatom enthalten können.

Ein Verfahren mit einer Reaktionsbeschleunigersubstanz gemäß Anspruch 10 hat sich als vorteilhaft erwiesen und ermöglicht insbesondere eine vereinfachte Trennung der Reaktionsbeschleunigersubstanz von dem freigesetzten Wasserstoffgas. Wesentlich ist, dass der Dampfdruck des Reaktionsbeschleunigers höher ist und insbesondere deutlich höher ist als der Dampfdruck des Wasserstoffträgermediums, insbesondere unter den Reaktionsbedingungen der Wasserstofffreisetzung, also der Reaktionstemperatur und dem Reaktionsdruck. Bei diesem Verfahren wird die Reaktionsbeschleunigersubstanz in flüssiger und/oder gasförmiger Form in den Reaktionsbehälter zugeführt und dort bereitgestellt. Die Reaktionsbeschleunigersubstanz wird zusammen mit dem freigesetzten Wasserstoff gasförmig aus dem Reaktionsbehälter abgeführt. Die Reaktionsbeschleunigersubstanz kann aus dem Abgasstrom auskondensiert und in den Reaktionsbehälter zurückgeführt werden. Beim Auskondensieren der metallfreien Reaktionsbeschleunigersubstanz bleibt in der Gasphase Wasserstoff in hoher Reinheit zurück. Insbesondere ist der Dampfdruck der Reaktionsbeschleunigersubstanz mehr als doppelt so groß, insbesondere mehr als fünfmal so groß, insbesondere mehr als zehnmal so groß, insbesondere mindestens 50 mal so groß, insbesondere mindestens 100 mal so groß und insbesondere mindestens 200 mal so groß wie der Dampfdruck des Wasserstoffträgermediums. Die LOHC-Verbindungen weisen bei Raumtemperatur einen Dampfdruck auf, der kleiner ist als 1 mbar. Vorteilhaft ist es, wenn die Reaktionsbeschleunigersubstanz bei Raumtemperatur einen Dampfdruck aufweist, der mindestens 10 mbar beträgt. Dies ist beispielsweise für die Reaktionsbeschleunigersubstanzen Aceton, 2-Butanon, 2-Pentanon, Cyclopentanon und/oder Cyclohexanon der Fall.

Beispielsweise beträgt der Dampfdruck der LOHC-Substanz Dibenzyltoluol bei Raumtemperatur weniger als 1 mbar. Der Dampfdruck der Reaktionsbeschleunigersubstanz Aceton beträgt bei Raumtemperatur 246 mbar.

Alternativ kann bei einem Verfahren gemäß Anspruch 11 eine vereinfachte Wasserstofffreisetzung dadurch erreicht werden, dass der Dampfdruck der Reaktionsbeschleunigersubstanz geringer und insbesondere deutlich geringer ist als der Dampfdruck des Wasserstoffträgermediums, insbesondere unter den Bedingungen des Wasserstofffreisetzungsprozesses. Bei diesem Verfahren wird die metallfreie Reaktionsbeschleunigersubstanz zu Beginn in den Reaktionsbehälter zugegeben, der freigesetzte Wasserstoff verlässt gasförmig den Reaktionsbehälter zusammen mit einer gewissen Menge an Wasserstoffträgermedium, das aus dem Produktstrom auskondensiert wird, sodass Wasserstoff in hoher Reinheit zurückbleibt. Insbesondere weist eine Reaktionsbeschleunigersubstanz mit einem hohen Molekulargewicht einen niedrigen Dampfdruck auf. Die Reaktionsbeschleunigersubstanz ist beispielsweise eine hochmolekulare Flüssigkeit oder eine im Wasserstoffträgermedium gelöste, hochmolekulare Verbindung, beispielsweise ein flüssiges oder lösliches Polymer.

Insbesondere sind die Dampfdrücke unter Reaktionsbedingungen im Reaktionsbehälter unterschiedlich. Dadurch ist es möglich, dass das Wasserstoffträgermedium zusammen mit dem freigesetzten Wasserstoff verdampft, während die Reaktionsbeschleunigersubstanz im Reaktor verbleibt.

Das Wasserstoffträgermedium Dibenzyltoluol weist bei einer Reaktionstemperatur von 210 °C einen Dampfdruck von 2,6 mbar auf. Die Reaktionsbeschleunigersubstanz, insbesondere Polyvinylalkohol, hat bei einer Reaktionstemperatur von 210 °C einen Dampfdruck von unter 0,2 mbar.

Insbesondere ist der Dampfdruck der Reaktionsbeschleunigersubstanz kleiner als 80% des Dampfdrucks des Wasserstoffträgermediums, insbesondere kleiner als 60%, insbesondere kleiner als 30% und insbesondere kleiner als 10%.

Ein Verfahren gemäß Anspruch 12 ermöglicht eine vereinfachte Abtrennung der Reaktionsbeschleunigersubstanz von dem Wasserstoffträgermedium insbesondere am Ausgang des Reaktionsbehälters. Insbesondere kann die Reaktionsbeschleunigersubstanz durch Dekantieren von dem Wasserstoffträgermedium abgetrennt werden. Dies wird insbesondere dadurch erreicht, dass die Reaktionsbeschleunigersubstanz, sowohl in der wasserstoffabgereicherten Form als auch bei einer Mischung aus wasserstoffangereicherter Form und wasserstoffabgereicherter Form und bei Reaktionstemperaturen unter 50 °C eine Mischungslücke mit dem Wasserstoffträgermedium aufweist. Das bedeutet, dass das Stoffgemisch in diesem Zustandsraum in zwei nicht-mischbare flüssige Phasen zerfällt, also sich selbstständig entmischt. Die Abtrennung der Reaktionsbeschleunigersubstanz kann beispielsweise unkompliziert in einem Abscheider erfolgen.

Es wurde erkannt, dass eine intrinsische Eigenschaft eines Gemisches aus der Reaktionsbeschleunigersubstanz, die insbesondere Alkohole und/oder Polyole umfasst, und dem Wasserstoffträgermedium, das insbesondere Aromaten und/oder Cycloalkanen umfasst, darin besteht, dass es eine flüssig-flüssig Mischungslücke aufweist. Insbesondere ist die flüssig-flüssig Mischungslücke bei dem Gemisch Dibenzyltoluol und Aceton gegeben. Die Mischungslücke kann vorteilhaft für nachfolgende Stofftrennungsschritte genutzt werden.

Bei einem Verfahren mit einer Reaktionsbeschleunigersubstanz gemäß Anspruch 13 kann diese unkompliziert von dem freigesetzten Wasserstoffgas und von dem Wasserstoffträgermedium abgetrennt werden. Die Reaktionsbeschleunigersubstanz liegt insbesondere als Feststoff vor. Vorteilhaft ist, wenn die Reaktionsbeschleunigersubstanz als Feststoff in unmittelbarer räumlicher Nähe zum metallhaltigen Katalysator angeordnet ist. Dies kann beispielsweise dadurch erreicht werden, dass der Katalysator direkt auf einem Feststoff abgeschieden wird, der als Reaktionsbeschleunigersubstanz wirkt. Insbesondere vorteilhaft ist es, wenn die Reaktionsbeschleunigersubstanz eine Membranwirkung aufweist. Eine Membranwirkung liegt vor, wenn beispielsweise zwei Reaktionsräume durch die Membran derart getrennt werden, dass bevorzugt kleine Moleküle wie Wasserstoffgas mit hoher Diffusionsgeschwindigkeit die Membran passieren können. Große Moleküle wie das Wasserstoffträgermedium werden an der Membran zurückgehalten, können die Membran also nicht passieren. Insbesondere sind feste Reaktionsbeschleunigersubstanzen Polymere, die sich dadurch auszeichnen, dass sie in ihrer hochmolekularen Struktur eine geeignete Anzahl an sauerstoff- oder stickstoffhaltigen funktionellen Gruppen tragen, die in Kontakt mit einem zumindest teilweise beladenen Wasserstoffträgermedium reduzierbar und in dieser reduzierten Form leicht dehydrierbar sind.

Geeignete Reaktionsbeschleunigersubstanzen sind Polymere, bei denen das zahlenmäßige Verhältnis von reduzierbaren und in reduzierter Form leicht hydrierbaren Gruppen zu den im Polymer vorhanden Kohlenstoffatomen kleiner als 100, insbesondere kleiner als 20 und insbesondere kleiner als 5 ist.

Solche Polymerstrukturen können aus sauerstoff- oder stickstoffhaltigen Monomeren durch Polymerisation hergestellt werden. Weitere feste Reaktionsbeschleunigersubstanzen können anorganische Partikel sein, beispielsweise feste Metalloxid-Partikel, auf die sauerstoffhaltige oder stickstoffhaltige organische Gruppen durch kovalente Immobilisierung aufgebracht werden. Die kovalente Immobilisierung wird als sogenanntes "Grafting" bezeichnet. Eine feste Reaktionsbeschleunigersubstanz kann auch durch Pyrolyse von Sauerstoff oder Stickstoff enthaltenden organischen Ausgangsstoffen wie beispielsweise Zuckern oder Aminozuckern oder anderen Kohlenhydraten oder amino-funktionalisierten Kohlenhydraten gebildet werden. Bei der Pyrolyse bilden sich im Pyrolysat sauerstoff- oder stickstoffhaltige funktionelle Gruppen.

Eine Vorrichtung mit mindestens einem Reaktionsbehälter und einer darin angeordneten Kontaktiereinheit ermöglicht die Durchführung des erfindungsgemäßen Verfahrens. Die Vorrichtung stellt sicher, dass ein intensiver Kontakt zwischen dem beladenen Wasserstoffträgermedium, dem metallhaltigen Katalysator und der metallfreien Reaktionsbeschleunigersubstanz gewährleistet ist. Der intensive Kontakt der genannten Substanzen ist für die Effizienz, insbesondere die Freisetzungsrate des Wasserstoffs, in dem erfindungsgemäßen Verfahren wesentlich. Die intensive Kontaktierung der Substanzen erfolgt mittels einer im Reaktionsbehälter angeordneten Kontaktiereinheit. Der intensive Kontakt kann beispielsweise durch einen Rührer, statische Mischelemente oder eine geeignete Strömungsführung der Substanzen im Reaktionsbehälter erfolgen. Für die geeignete Strömungsführung können in dem Reaktionsbehälter Strömungsleitelemente vorgesehen sein. Als Reaktionsbehälter dient beispielsweise ein Rührkesselreaktor, ein Schlaufenreaktor mit statischen Mischern, ein Rieselbettreaktor, ein Festbettreaktor mit intensiver Durchströmung und/oder ein Blasensäulenreaktor. Der Reaktionsbehälter kann mit weiteren prozesstechnischen Apparaten, Behältern und Aggregaten zu einem Wasserstofffreisetzungsapparat verknüpft werden. Der Wasserstofffreisetzungsapparat weist insbesondere eine Steuerungseinheit zur Prozesssteuerung auf, die insbesondere in bidirektionaler Signalverbindung mit Heizaggregaten, Pumpen und/oder Ventilen des Wasserstofffreisetzungsapparats steht. Der Wasserstofffreisetzungsapparat wird bei Gesamtdrücken von unter 50 bar, insbesondere von unter 20 bar und insbesondere von unter 3 bar erfindungsgemäß betrieben.

Sowohl die in den Patentansprüchen angegebenen Merkmale als auch die in den nachfolgenden Ausführungsbeispielen der erfindungsgemäßen Vorrichtung und des erfindungsgemäßen Verfahrens angegebenen Merkmale sind jeweils für sich alleine oder in Kombination miteinander geeignet, den erfindungsgemäßen Gegenstand weiterzubilden. Die jeweiligen Merkmalskombinationen stellen hinsichtlich der Weiterbildungen des Erfindungsgegenstands keine Einschränkung dar, sondern weisen im Wesentlichen lediglich beispielhaften Charakter auf.

Weitere Merkmale, Vorteile und Einzelheiten der Erfindung ergeben sich aus der nachfolgenden Beschreibung von Ausführungsbeispielen anhand der Zeichnung. Es zeigen:
- Fig. 1: eine schematische Darstellung einer Vorrichtung gemäß einem ersten Ausführungsbeispiel mit einem Reaktionsbehälter als Rührkesselreaktor zum Dehydrieren eines Wasserstoffträgermediums,
- Fig. 2: eine Fig. 1 entsprechende Darstellung einer Vorrichtung gemäß einem zweiten Ausführungsbeispiel mit einem Blasensäulenreaktor als Reaktionsbehälter,
- Fig. 3: eine Fig. 1 entsprechende Darstellung einer Vorrichtung gemäß einem dritten Ausführungsbeispiel mit einem Festbettreaktor als Reaktionsbehälter,
- Fig. 4: eine Fig. 1 entsprechende Darstellung einer Vorrichtung gemäß einem vierten Ausführungsbeispiel mit einer reaktionsbeschleunigenden Membran in einem Reaktionsbehälter,
- Fig. 5: mit zwei getrennten, in Reihe angeordneten Reaktionsbehältern.

Auch Einzelheiten der im Folgenden näher erläuterten Ausführungsbeispiele können für sich genommen eine Erfindung darstellen oder Teil eines Erfindungsgegenstands sein.

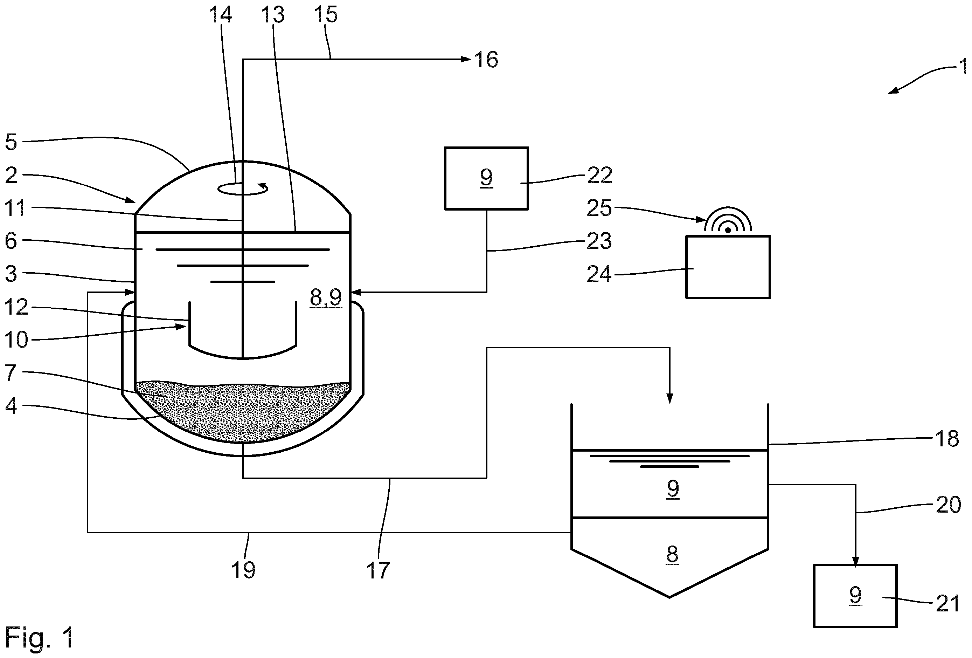

Ein als Ganzes in Fig. 1 mit 1 gekennzeichneter Wasserstofffreisetzungsapparat weist einen Reaktionsbehälter 2 auf, der gemäß dem gezeigten Ausführungsbeispiel als Rührkesselreaktor ausgeführt ist. Der Reaktionsbehälter 2 weist ein geschlossenes Gehäuse 3 auf, das einen Boden 4, einen Deckel 5 und eine den Boden 4 mit dem Deckel 5 verbindende Seitenwand 6 aufweist.

In dem Reaktionsbehälter 2 ist insbesondere im Bereich des Bodens 4 ein metallhaltiges Katalysatormaterial 7, insbesondere als Partikelschüttung angeordnet. In dem Reaktionsbehälter 2 ist zudem eine flüssige, metallfreie Reaktionsbeschleunigersubstanz 8 und ein zumindest teilweise beladenes Wasserstoffträgermedium 9, insbesondere heteroatomfreies LOHC, bereitgestellt.

Der Reaktionsbehälter 2 weist eine Kontaktiereinheit 10 auf, die gemäß dem gezeigten Ausführungsbeispiel als Rührer ausgeführt ist. Der Rührer ist um eine Drehachse 11 drehbar, die insbesondere parallel zur Längsachse des Gehäuses 3 orientiert ist und insbesondere parallel zu der, insbesondere zylindrischen, Seitenwand 6 des Gehäuses 3 orientiert ist. Der Rührer ist mit seinen Rührelementen 12 unterhalb des Pegels 13 der Mischung aus Reaktionsbeschleunigersubstanz 8 und Wasserstoffträgermedium 9 angeordnet. Die Drehrichtung des Rührers um die Drehachse 11 ist durch den Pfeil 14 symbolisiert.

Der Reaktionsbehälter 2 weist, insbesondere am Deckel 5, eine Wasserstoffabführleitung 15 auf, über die der im Reaktionsbehälter 2 freigesetzte gasförmige Wasserstoff 16 einer weiteren Verwendung, beispielsweise einer Verstromung in einer Brennstoffzelle oder einer thermischen Verwertung, zugeführt werden kann. Die Wasserstoffabführleitung 15 kann auch an einer anderen Position an dem Gehäuse 3 angeschlossen sein. Vorteilhaft ist es, wenn die Wasserstoffabführleitung 15 an einer Stelle des Gehäuses 3 angeordnet ist, die oberhalb des Pegels 13 liegt.

An dem Reaktionsbehälter 2 ist ferner eine Flüssigkeitsabführleitung 17 angeschlossen, die zu einem Abscheider 18 führt. Der Abscheider 18 ist über eine Rückführleitung 19 mit dem Reaktionsbehälter 2 verbunden. Der Anschluss für die Flüssigkeitsabführleitung 17 an dem Reaktionsbehälter 2 ist gemäß dem gezeigten Ausführungsbeispiel am Boden 4 vorgesehen, insbesondere an einem tiefsten Punkt des Gehäuses 3. Dadurch ist eine besonders vorteilhafte Entnahme von Flüssigkeit aus dem Reaktionsbehälter 2 gewährleistet. Die Flüssigkeitsabführleitung 17 kann auch an einer anderen Stelle des Gehäuses 3 an dem Reaktionsbehälter 2 angeschlossen sein. Vorteilhaft ist es, wenn die Anschlussstelle für die Flüssigkeitsabführleitung 17 an einer Stelle des Gehäuses 3 angeordnet ist, die unterhalb des Pegels 13 angeordnet ist.

Die Anschlussstelle für die Rückführleitung 19 an dem Reaktionsbehälter 2 ist insbesondere im Bereich der Rührelemente 12 vorgesehen. Dadurch ist die Vermischung der rückgeführten Reaktionsbeschleunigersubstanz 8 mit der im Reaktionsbehälter 2 bereits vorhandenen Flüssigkeitsmischung verbessert.

Der Abscheider 18 ist ferner über eine Fluidleitung 20 mit einem ersten Speicherbehälter 21 für entladenes Wasserstoffträgermedium 9 verbunden.

Ein zweiter Speicherbehälter 22 für beladenes Wasserstoffträgermedium 9 ist über eine Wasserstoffträgermediumzuführleitung 23 mit dem Reaktionsbehälter 2 verbunden. Die Wasserstoffträgermediumzuführleitung 23 ist an dem Gehäuse 3 insbesondere in einem Bereich der Rührelemente 12 angeordnet. Die Vermischung des zugeführten, beladenen Wasserstoffträgermediums 9 mit der im Reaktionsbehälter 2 vorhandenen Flüssigkeitsmischung ist dadurch verbessert.

Der Wasserstofffreisetzungsapparat 1 weist eine Steuerungseinheit 24 auf, die mit den einzelnen Komponenten des Wasserstofffreisetzungsapparats 1, insbesondere dem Reaktionsbehälter 2, dem Abscheider 18, dem ersten Speicherbehälter 21, dem zweiten Speicherbehälter 22 in Signalverbindung steht. Insbesondere steht die Steuerungseinheit 24 mit weiteren, in Fig. 1 nicht näher dargestellten Aggregaten wie Heizaggregaten, Pumpen und/oder Ventilen, die insbesondere entlang der Leitungen 15, 17, 19, 20 und 23 angeordnet sind, in Signalverbindung. Mittels der Steuerungseinheit 24 ist es möglich, das Verfahren zum Freisetzen von Wasserstoffgas aktiv zu steuern, um beispielsweise die Reaktionsbedingungen im Reaktionsbehälter 2, insbesondere Reaktionstemperatur und/oder Reaktionsdruck, sowie den Pegelstand 13 zu überwachen und zu beeinflussen.

Zur Überwachung sind in oder an den genannten Komponenten entsprechende Sensoren angeordnet, die ebenfalls mit der Steuerungseinheit 24 in Signalverbindung stehen. Die Signalverbindungen können, wie in Fig. 1 durch das Symbol 25 angedeutet, kabellos, insbesondere als Funkverbindung, ausgeführt sein. Die Signalverbindungen können zusätzlich oder alternativ kabelgebunden ausgeführt sein.

Nachfolgend wird der Betrieb des Wasserstofffreisetzungsapparats 1 für die Nutzung eines Polyvinylalkohols mit einem Molgewicht von über 10000 g/mol als Reaktionsbeschleunigersubstanz 8 und Perhydrodibenzyltoluol als wasserstoffbeladenes Wasserstoffträgermedium 9 beispielhaft näher erläutert.

In dem Reaktionsbehälter 2 sind Palladium aus Aktivkohle als metallhaltiges Katalysatormaterial 7, Polyvinylalkohol als metallfreie Reaktionsbeschleunigersubstanz 8 und Perhydrodibenzyltoluol als Wasserstoffträgermedium 9 vorgesehen. Die Reaktionsbeschleunigersubstanz 8 liegt als Flüssigkeit vor und weist gemäß dem gezeigten Ausführungsbeispiel ein thermomorphes Verhalten auf. Das bedeutet, dass die Reaktionsbeschleunigersubstanz 8 unter den Reaktionsbedingungen von 200 °C und einem Gesamtdruck von kleiner 2 mbar im Reaktionsbehälter 2 in dem Wasserstoffträgermedium 9 zumindest teilweise gelöst ist.

Durch den intensiven Kontakt, der sich durch das Verrühren der Flüssigkeitsmischung 8, 9 und dem Katalysatormaterial 7 ergibt, wird zunächst Wasserstoffgas vom Polyvinylceton unter Bildung eines entsprechenden Polyketons oder entsprechenden Enols freigesetzt. Im Anschluss daran wird Wasserstoff von dem Wasserstoffträgermedium 9 auf die zumindest teilweise wasserstoffentladene Reaktionsbeschleunigersubstanz 8 übertragen. Die so gebildete wasserstoffreiche Form der Reaktionsbeschleunigersubstanz 8, also der entsprechende Polyvinylalkohol, wird unter den gleichen Reaktionsbedingungen im Reaktionsbehälter 2 unter Wasserstofffreisetzung dehydriert. Die Flüssigkeitsmischung 8, 9 wird über die Flüssigkeitsabführleitung 17 aus dem Reaktionsbehälter 2 ab- und dem Abscheider 18 zugeführt.

In dem Abscheider 18 herrscht eine Temperatur von höchstens 50 °C. Besonders vorteilhaft ist, dass die Reaktionsbeschleunigersubstanz 8 eine Mischungslücke bei einer Temperatur von höchstens 50 °C mit dem Wasserstoffträgermedium 9 aufweist. Wie in Fig. 1 schematisch dargestellt, bilden sich in dem Abscheider 18 eigenständig zwei separate, voneinander getrennte Flüssigkeitsschichten, wobei die Reaktionsbeschleunigersubstanz 8 unten und das vergleichsweise weniger dichte Wasserstoffträgermedium 9 oben in dem Abscheider 18 vorliegen. Insbesondere beträgt die Dichte der Polyvinylalkohole mehr als 1,1 g/cm³. Die Dichte von Dibenzyltoluol ist etwa 1,05 g/cm³. Die Reaktionsbeschleunigersubstanz 8 ist unkompliziert von dem Wasserstoffträgermedium 9 trennbar und kann über die Rückführleitung 19 zur erneuten Verwendung dem Reaktionsbehälter 2 zugeführt werden.

Das entladene Wasserstoffträgermedium 9 wird aus dem Abscheider 18 über die Fluidleitung 20 in den ersten Speicherbehälter 21 gefördert. Das entladene Wasserstoffträgermedium 9 kann mittels einer Beladestation wieder mit Wasserstoff angereichert, also beladen werden. Die Beladestation kann am Ort des Wasserstofffreisetzungsapparats 1 oder entfernt davon angeordnet sein. Beladenes oder wieder beladenes Wasserstoffträgermedium 9 wird in dem zweiten Speicherbehälter 22 bevorratet und über die Wasserstoffträgerzuführleitung 23 dem Reaktionsbehälter 2 zugeführt.

Wasserstoff 16, der insbesondere unmittelbar oder in atomarer Form von dem Wasserstoffträgermedium 9 auf die Reaktionsbeschleunigersubstanz 8 übergeht, kann von der Reaktionsbeschleunigersubstanz 8 als Wasserstoffgas 16 abgegeben und über die Wasserstoffabführleitung 15 aus dem Reaktionsbehälter 2 abgeführt werden.

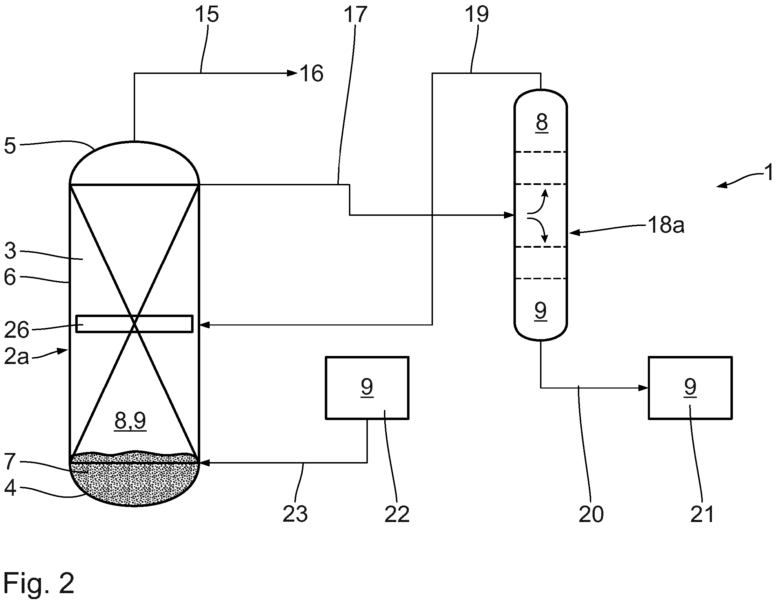

Im Folgenden wird unter Bezugnahme auf Fig. 2 ein zweites Ausführungsbeispiel der Erfindung beschrieben. Konstruktiv identische Teile erhalten dieselben Bezugszeichen wie beim ersten Ausführungsbeispiel, auf dessen Beschreibung hiermit verwiesen wird. Konstruktiv unterschiedliche, jedoch funktionell gleichartige Teile erhalten dieselben Bezugszeichen mit einem nachgestellten a.

Der wesentliche Unterschied gegenüber dem ersten Ausführungsbeispiel besteht darin, dass der Reaktionsbehälter 2a als Blasensäulenreaktor ausgeführt ist. In dem Reaktionsbehälter 2a sind das Katalysatormaterial 7, das flüssige Wasserstoffträgermedium 9 und die Reaktionsbeschleunigersubstanz 8, die flüssig und/oder gasförmig vorliegt, angeordnet. Wesentlich ist bei dieser Ausführungsform, dass die Reaktionsbeschleunigersubstanz unter den Bedingungen in dem Reaktionsbehälter 2a einen Dampfdruck p_{R} aufweist, der deutlich über dem Dampfdruck p_{W} des Wasserstoffträgermediums 9 liegt. Als Reaktionsbeschleunigersubstanz 8 dient insbesondere Aceton. Als Wasserstoffträgermedium 9 dient Perhydrodibenzyltoluol. Unter den beispielhaft genannten Reaktionsbedingungen mit einer Reaktionstemperatur von 210 °C und einem Gesamtdruck von unter 2 bar liegt Perhydrodibenzyltoluol flüssig vor. Der Dampfdruck p_{R} liegt bei rund 2 mbar. Aceton liegt dagegen unter diesen Reaktionsbedingungen, insbesondere der Reaktionstemperatur und dem Gesamtdruck, gasförmig vor.

Der Blasensäulenreaktor ist ein verfahrenstechnischer Apparat für Gas-/ Flüssigkeitsprozesse. Der Blasensäulenreaktor ist durch eine Flüssigkeit, im vorliegenden Fall Wasserstoffträgermedium 9, gekennzeichnet, in die Gas, im vorliegenden Fall die Reaktionsbeschleunigersubstanz 8, eingebracht wird und in Blasen durch die Flüssigkeit perlt und dabei eine Phasengrenzfläche zwischen der Reaktionsbeschleunigersubstanz 8 und dem flüssigen Wasserstoffträgermedium 9 erzeugt. Die Begasung erfolgt insbesondere durch ein gelochtes Verteilerblech, ein Verdampferelement, oder ein Einblasrohr als Verteilerelement 26, das an die Rückführleitung 19 angeschlossen ist. Gemäß dem gezeigten Ausführungsbeispiel ist das Verteilerelement 26 etwa mittig an der Seitenwand 6 zwischen Boden 4 und Deckel 5 angeordnet.

Unterhalb der Anschlussstelle für die Rückführleitung 19 ist am Gehäuse 3 die Wasserstoffträgermediumzuführleitung 23 vorgesehen. Gemäß dem gezeigten Ausführungsbeispiel werden Wasserstoffträgermedium 9 und die Reaktionsbeschleunigersubstanz 8 im Gleichstromverfahren zugeführt und der Blasensäulenreaktor im Gleichstromverfahren betrieben. Es ist auch denkbar, das Verfahren im Gegenstromverfahren durchzuführen.

Über die Flüssigkeitsabführleitung 17, die insbesondere im oberen Bereich des Gehäuses 3, benachbart zum Deckel 5, angeordnet ist, wird ein Gemisch von Reaktionsbeschleunigersubstanz 8 und Wasserstoffträgermedium 9 aus dem Reaktionsbehälter 2a ab- und dem Abscheider 18a zugeführt. Aufgrund des deutlich höheren Dampfdrucks der Reaktionsbeschleunigersubstanz 8 gegenüber dem Wasserstoffträgermedium 9 erfolgt eine unkomplizierte Abtrennung der beiden Substanzen in dem Abscheider 18a, der als luft- oder wassergekühlter Kondensator ausgeführt ist. Der Kondensator 18a kann innere Einbauten enthalten, um die Oberfläche in dem Kondensator 18a zu erhöhen und auf diese Weise die Kondensationswirkung zu verbessern.

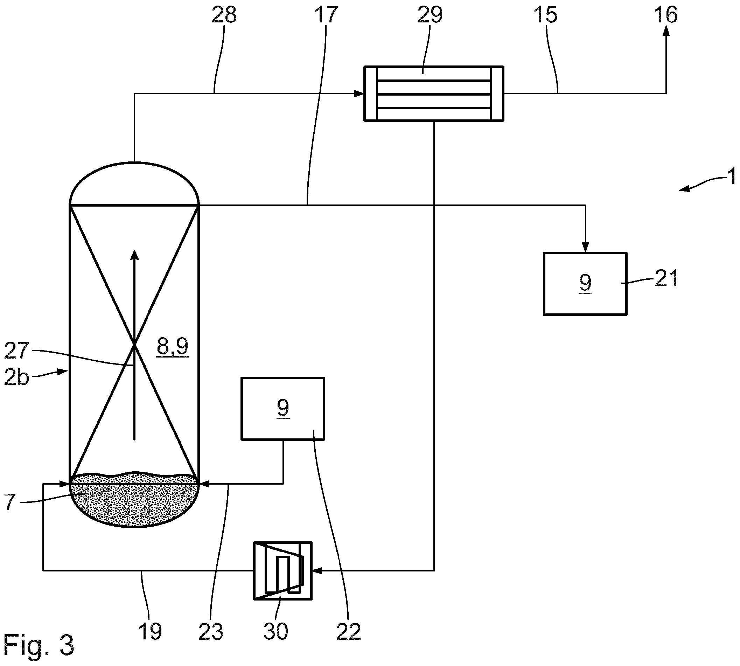

Im Folgenden wird unter Bezugnahme auf Fig. 3 ein drittes Ausführungsbeispiel der Erfindung beschrieben. Konstruktiv identische Teile erhalten dieselben Bezugszeichen wie beim ersten Ausführungsbeispiel, auf dessen Beschreibung hiermit verwiesen wird. Konstruktiv unterschiedliche, jedoch funktionell gleichartige Teile erhalten dieselben Bezugszeichen mit einem nachgestellten b.

Der wesentliche Unterschied gegenüber den vorherigen Ausführungsbeispielen besteht darin, dass der Reaktionsbehälter 2b als Festbettreaktor ausgeführt ist. In den Festbettreaktor wird ein Feststoff gefüllt. Der Feststoff ist die metallfreie Reaktionsbeschleunigersubstanz 8, wobei der Feststoff gleichzeitig als poröses Trägermaterial für den metallhaltigen Katalysator 7 dient. Dieser Feststoff kann an räumlich getrennten Orten seiner Struktur sowohl die Funktion des metallfreien Reaktionsbeschleunigers 8 als auch die Funktion des metallhaltigen Katalysators 7 bereitstellen. Gemäß dem gezeigten Ausführungsbeispiel handelt es sich bei der festen metallfreien Reaktionsbeschleunigersubstanz 8 um ein Alkohol-Funktionalitäten enthaltendes poröses Zuckerpyrolyse-Produkt, das als Trägermaterial für den metallhaltigen Katalysator 7, hier beispielhaft Platin-Nanopartikel, dient.

Der Reaktionsbehälter 2b wird beispielhaft bei einer Temperatur von 240 °C und einem Gesamtdruck von 1 bar von dem beladenen Wasserstoffträgermedium 9, gemäß dem gezeigten Ausführungsbeispiel in Fig. 3 von unten nach oben entlang der Strömungsrichtung 27 durchströmt. Dadurch wird die Reaktionsbeschleunigersubstanz 8 zunächst hydriert, wobei Wasserstoff in elementarer Form als Gas anschließend in einer Dehydrierreaktion von der Reaktionsbeschleunigersubstanz 8 wieder abgegeben wird und den Reaktionsbehälter 2b über eine Mischleitung 28 zusammen mit verdampftem Wasserstoffträgermedium 9 abgeführt wird.

An die Mischleitung 28 ist ein Kondensator 29 angeschlossen, in dem das gasförmig ausgetragene Wasserstoffträgermedium 9 kondensiert. Das kondensierte Wasserstoffträgermedium 9 wird über einen Wärmetauscher 30 und die Rückführleitung 19 in den Reaktionsbehälter 2b zurückgeführt. Aus dem Kondensator 29 wird reiner gasförmiger Wasserstoff 16 über die Wasserstoffabführleitung 15 abgeführt. Das zumindest teilweise entladene Wasserstoffträgermedium 9 verlässt den Reaktionsbehälter 2b über die Flüssigkeitsabführleitung 17 überwiegend in flüssiger Form und wird insbesondere dem ersten Speicherbehälter 21 zugeführt.

Die Rückführleitung 19 und die Wasserstoffträgermediumzuführleitung 23 sind jeweils in einem unteren Bereich des Reaktionsbehälters 2b angeordnet. Die Reaktionsbeschleunigersubstanz 8 und das beladene Wasserstoffträgermedium 9 durchströmen den Festbettreaktor gemeinsam entlang der Strömungsrichtung 27, also im Gleichstromverfahren. Der Festbettreaktor kann auch im Gegenstromverfahren betrieben werden.

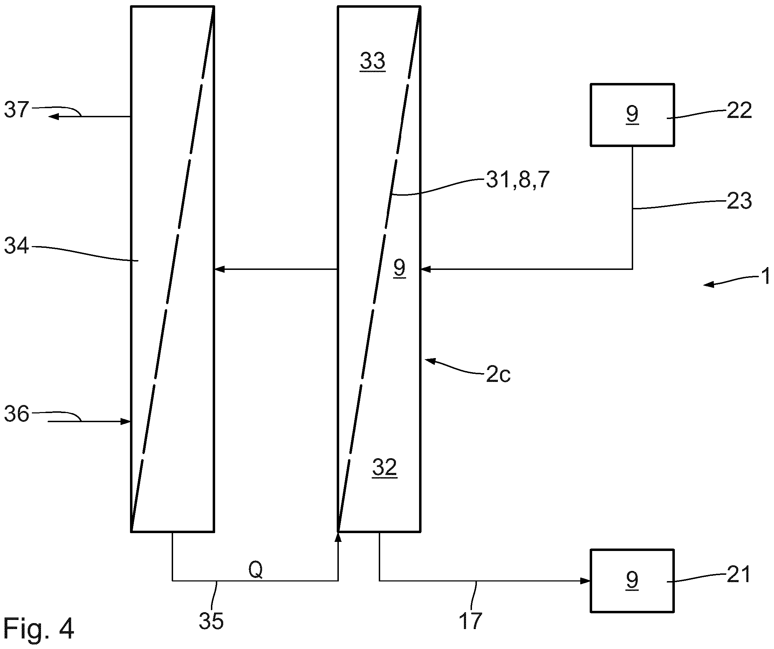

Im Folgenden wird unter Bezugnahme auf Fig. 4 ein viertes Ausführungsbeispiel der Erfindung beschrieben. Konstruktiv identische Teile erhalten dieselben Bezugszeichen wie beim ersten Ausführungsbeispiel, auf dessen Beschreibung hiermit verwiesen wird. Konstruktiv unterschiedliche, jedoch funktionell gleichartige Teile erhalten dieselben Bezugszeichen mit einem nachgestellten c.

Der wesentliche Unterschied gegenüber dem vorherigen Ausführungsbeispiel besteht darin, dass der Behälter 2c eine reaktionsbeschleunigende Membran 31 aufweist, die den Reaktionsbehälter in einen ersten Teilraum 32 und einen zweiten Teilraum 33 trennt. Die reaktionsbeschleunigende Membran 31 ist aus dem Feststoff der Reaktionsbeschleunigersubstanz 8 hergestellt. Die Reaktionsbeschleunigungssubstanz 8 bildet ein Strukturgerüst der Membran 31 und dient zudem als Träger für den darauf aufgebrachten metallhaltigen Katalysator 7. Vorteilhaft ist es, wenn das Membranmaterial reaktionsbeschleunigend wirkt und über eine Protonenleitfähigkeit und/oder selektive Wasserstoffdurchlässigkeit, insbesondere von dem ersten Teilraum 32 in den zweiten Teilraum 33 verfügt. Auf diese Weise kann reines Wasserstoffgas auf der Permeat-Seite, also im zweiten Teilraum 33, gewonnen werden. Der freigesetzte Wasserstoff wird durch den Transport durch die Membran 31 dem Gleichgewicht entzogen, sodass Gleichgewichtslimitierungen in der Dehydrierreaktion überwunden werden können.

Gemäß dem gezeigten Ausführungsbeispiel in Fig. 4 ist benachbart zu dem Reaktionsbehälter 2c eine Brennstoffzelle 34 angeordnet. Wärme, die während des exothermen Brennstoffzellenbetriebs entsteht, kann direkt und insbesondere ohne Verwendung eines Wärmetauschers für den Betrieb der reaktionsbeschleunigenden Membran 31 genutzt werden. Dazu dient eine unmittelbare Wärmeübertragungsleitung 35, die die Brennstoffzelle 34 mit dem Reaktionsbehälter 2c, insbesondere mit der darin angeordneten Membran 31, verbindet. Für die Wärmeübertragung wird ein an der Brennstoffzelle 34 angebrachter Wärmetauscher genutzt, der ein Wärmeträgermedium, insbesondere das als Wärmeträgermedium nutzbare Wasserstoffträgermedium 9 erwärmt. Das erwärmte Wärmeträgermedium wird dem Reaktionsbehälter 2c zugeführt, um diesen mithilfe eines Wärmetauschers zu heizen.

Alternativ kann die Wärmeübertragung besonders vorteilhaft dadurch realisiert werden, dass sich Brennstoffzelle 34 und der Reaktionsbehälter 2c in einem thermoisolierten Behälter befinden. So kann die Wärmeerzeugung der Brennstoffzelle 34 direkt für die Wasserstofffreisetzung im Reaktionsbehälter 2c nutzbar gemacht werden.

Für die Wärmeübertragung kann zusätzlich oder alternativ eine Heat-Pipe genutzt werden, die isotherm und insbesondere effizient die räumlich nebeneinander angeordnete Brennstoffzelle mit dem Reaktionsbehälter verbindet.

Die Brennstoffzelle 34 weist weiterhin eine Zuführleitung 36 auf, um Sauerstoff, insbesondere Umgebungsluft, der Brennstoffzelle 34 zuzuführen. An die Brennstoffzelle 34 ist eine Stromleitung 37 angeschlossen, um elektrische Energie aus der Brennstoffzelle 34 auszukoppeln.

Weiter vorteilhaft ist, dass durch den Wasserstoffverbrauch in der Brennstoffzelle 34 ein steilerer Gradient der Wasserstoffkonzentration über den Wasserstofffreisetzungsapparat 1 erzeugt wird. Insgesamt steigt damit die thermodynamische Triebkraft für die Wasserstofffreisetzung, sodass die Freisetzungsrate zusätzlich erhöht ist.

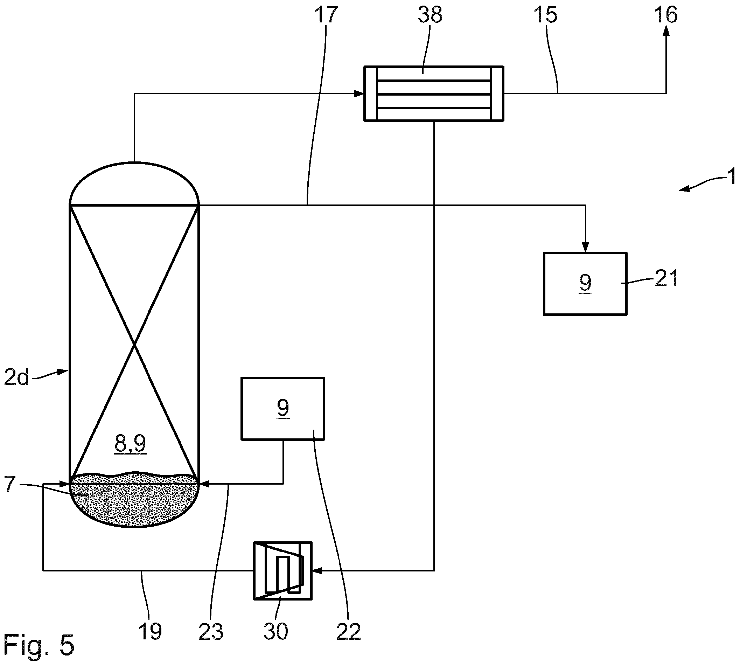

Im Folgenden wird unter Bezugnahme auf Fig. 5 ein fünftes Ausführungsbeispiel der Erfindung beschrieben. Konstruktiv identische Teile erhalten dieselben Bezugszeichen wie beim ersten Ausführungsbeispiel, auf dessen Beschreibung hiermit verwiesen wird. Konstruktiv unterschiedliche, jedoch funktionell gleichartige Teile erhalten dieselben Bezugszeichen mit einem nachgestellten d.

Der wesentliche Unterschied gegenüber dem dritten Ausführungsbeispiel besteht darin, dass zusätzlich zu dem Reaktionsbehälter 2d, der als Festbettreaktor ausgeführt ist, ein zweiter Reaktionsbehälter 38 vorgesehen ist.

In dem ersten Reaktionsbehälter 2d findet in der beschriebenen Weise die Wasserstoffübertragung von dem beladenen Wasserstoffträgermedium 9 auf die Reaktionsbeschleunigersubstanz 8 statt. Die angereicherte Form der Reaktionsbeschleunigersubstanz 8 wird dem zweiten Reaktionsbehälter 38 zugeführt, in dem die Wasserstofffreisetzung erfolgt. Wesentlich ist, dass sowohl in dem ersten Reaktionsbehälter 2d als auch in dem zweiten Reaktionsbehälter 38 jeweils der metallhaltige Katalysator 7 enthalten ist.

Die Katalysatoren in den Reaktionsbehältern 2d, 38 können identisch oder unterschiedlich sein.

Gemäß dieser Ausführungsform sind die Teilreaktionen auf verschiedene Reaktionsbehälter 2d, 38 aufgeteilt. Dadurch können die Reaktionsbedingungen für die jeweilige Teilreaktion besser angepasst werden.

Vorteile ergeben sich gemäß dem fünften Ausführungsbeispiel insbesondere dadurch, dass die Reaktionstemperatur und der Reaktionsdruck der Wasserstoffübertragung vom Wasserstoffträgermedium 9 auf die Reaktionsbeschleunigersubstanz 8 einerseits und für die Freisetzung von Wasserstoffgas aus der auf diese Weise wasserstoffangereicherten Reaktionsbeschleunigersubstanz 8 andererseits unabhängig voneinander gewählt werden können. So kann beispielsweise die Wasserstoffübertragung vom Wasserstoffträgermedium 9 auf die Reaktionsbeschleunigersubstanz bei einem Reaktionsdruck von 1 bar und einer Temperatur von lediglich 180 °C durchgeführt werden. Mit dem Ziel eines erhöhten Wasserstoffgasdrucks kann die Wasserstoffgas-Freisetzung aus der Reaktionsbeschleunigersubstanz 8 beispielsweise bei 240 °C und 5 bar Gesamtdruck durchgeführt werden.

Durch die Kondensation der wasserstoffabgereicherten Reaktionsbeschleunigersubstanz 8 in dem zweiten Reaktionsbehälter 38 wird reines Wasserstoffgas 16 erzeugt. Die kondensierte Reaktionsbeschleunigersubstanz wird als Flüssigkeit über die Rückführleitung 19 in den ersten Reaktionsbehälter 2d zurückgeführt.

In einem Beispiel eines erfindungsgemäßen Verfahrens wurde in einem Autoklaven 290 g Perhydro-Dibenzyltoluol als beladenes Wasserstoffträgermedium mit einem Hydriergrad von 99% und 5,3 g eines kommerziellen Pd-auf-Kohle-Katalysators mit 5 Gewichts-% Pd sowie 58 g Aceton als Reaktionsbeschleunigersubstanz gemischt.

Im Autoklaven befinden sich 0,265 g Pd, was einer Menge von 0,25 mol% bezogen auf das eingesetzte Perhydro-Dibenzyltoluol entspricht. Außerdem befinden sich im Autoklaven in äquimolarer Menge Perhydro-Dibenzyltoluol und Aceton. Der Autoklav wird auf 210 °C erhitzt und auf dieser Temperatur unter Rühren für fünf Stunden gehalten. Anschließend wird der Autoklav wieder auf Raumtemperatur abgekühlt und der Autoklavendruck bei Raumtemperatur bestimmt. Danach wird der Autoklav entspannt, geöffnet und eine Flüssigprobe genommen. Es zeigt sich, dass eine erhebliche Menge des Wasserstoffgases gebildet wurde. Der Druck des Autoklaven nach vollständigem Abkühlen auf Raumtemperatur betrug über 16 bar. Eine gaschromatographische Analyse der Gasphase ergab, dass die Gasphase ausschließlich aus Wasserstoff besteht. Die Flüssigprobe ergab eine Hydriergradabnahme des Wasserstoffträgermediums von mehr als 10%, also auf weniger als 90%.

Bei einer vergleichbaren Durchführung der Wasserstofffreisetzung gemäß dem Stand der Technik, also ohne Verwendung von Aceton, bei sonst identischen Reaktionsbedingungen, konnte nur eine verschwindend geringe Wasserstoffmenge festgestellt werden. Der Druck im Autoklaven nach Abkühlen auf Raumtemperatur betrug weniger als 1,5 bar. Es konnte eine Hydriergradabnahme von weniger als 1%, also auf etwa 98%, festgestellt werden.

## Patentansprüche

1. Verfahren zum Dehydrieren eines Wasserstoffträgermediums umfassend die Verfahrensschritte
- Bereitstellen von
-- einem metallhaltigem Katalysatormaterial (7),
-- einem zumindest teilweise beladenem Wasserstoffträgermedium (9),
-- einer metallfreien Reaktionsbeschleunigersubstanz (8),
- Übertragen von Wasserstoff von dem Wasserstoffträgermedium (9) auf die Reaktionsbeschleunigersubstanz (8) mittels des metallhaltigen Katalysatormaterials (7),
- Freisetzen von Wasserstoffgas (16) von der Reaktionsbeschleunigersubstanz (8) mittels des metallhaltigen Katalysatormaterials (7),
wobei die Reaktionsbeschleunigersubstanz (8) mindestens eine funktionelle Gruppe aufweist, die sauerstoff- und/oder stickstoffhaltig ist.

2. Verfahren gemäß Anspruch 1, **gekennzeichnet durch** einen Reaktionsdruck (p) von 0,001 bar bis 50 bar, insbesondere von 0,3 bar bis 20 bar, insbesondere von 0,8 bar bis 3 bar und insbesondere von weniger als 0,1 bar.

3. Verfahren gemäß einem der vorstehenden Ansprüche, **gekennzeichnet durch** eine Reaktionstemperatur (T) von 25 °C bis 400 °C, insbesondere von 60 °C bis 250 °C, insbesondere von 80 °C bis 220 °C und insbesondere von weniger als 100 °C.

4. Verfahren gemäß einem der vorstehenden Ansprüche, **gekennzeichnet durch** eine Freisetzungsrate von mindestens 10 Normliter Wasserstoff pro Liter Katalysatorvolumen und Minute bei einer Reaktionstemperatur (T) von weniger als 250 °C.

5. Verfahren gemäß einem der vorstehenden Ansprüche, **dadurch gekennzeichnet, dass** die Reaktionsbeschleunigersubstanz (8) in der wasserstoffangereicherten Form sekundäre Alkohole gemäß 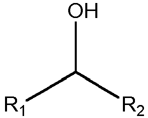 umfasst.

6. Verfahren gemäß einem der vorstehenden Ansprüche, **dadurch gekennzeichnet, dass** die Reaktionsbeschleunigersubstanz (8) in der wasserstoffangereicherten Form Oligovinylalkohole gemäß 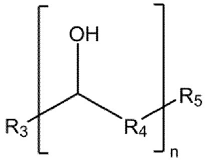 und/oder Polyvinylalkohole gemäß 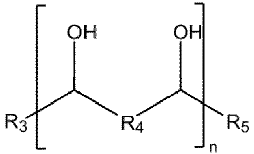 umfasst.

7. Verfahren gemäß einem der vorstehenden Ansprüche, **dadurch gekennzeichnet, dass** die Reaktionsbeschleunigersubstanz (8) in der wasserstoffangereicherten Form sekundäre Amine gemäß 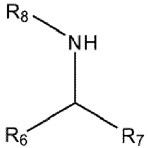 umfasst.

8. Verfahren gemäß einem der vorstehenden Ansprüche, **dadurch gekennzeichnet, dass** die Reaktionsbeschleunigersubstanz (8) in der wasserstoffangereicherten Form Oligovinylamine und/oder Polyvinylamine gemäß 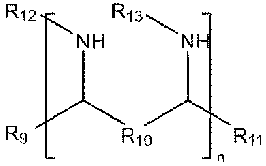 umfasst.

9. Verfahren gemäß einem der vorstehenden Ansprüche, **dadurch gekennzeichnet, dass** die Reaktionsbeschleunigersubstanz (8) in der wasserstoffangereicherten Form eine dehydrierbare hetero-alizyklische Verbindung gemäß 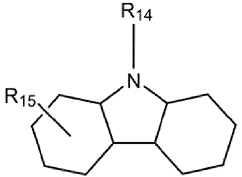 oder gemäß 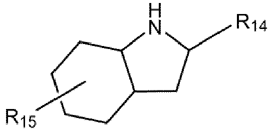 oder gemäß 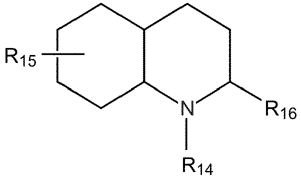 oder gemäß 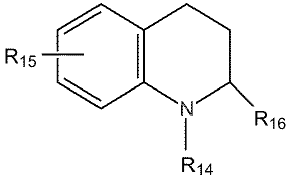 oder gemäß 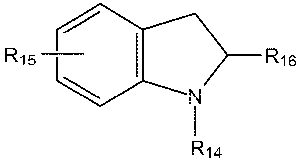 umfasst.

10. Verfahren gemäß einem der vorstehenden Ansprüche, **dadurch gekennzeichnet, dass** die Reaktionsbeschleunigersubstanz (8) einen Dampfdruck (p_{R}) aufweist, der größer ist als der Dampfdruck (p_{W}) des Wasserstoffträgermediums (9), wobei insbesondere gilt p_{R} > 1,5 · p_{W}, insbesondere p_{R} > 2,0 · p_{W}, insbesondere p_{R} > 5,0 · pw, insbesondere p_{R} > 10,0 · pw.

11. Verfahren gemäß einem der Ansprüche 1 bis 9, **dadurch gekennzeichnet, dass** die Reaktionsbeschleunigersubstanz (8) einen Dampfdruck (p_{R}) aufweist, der kleiner ist als der Dampfdruck (p_{W}) des Wasserstoffträgermediums (9), wobei insbesondere gilt p_{R} < 0,8 · p_{W}, insbesondere p_{R} < 0,6 · p_{W}, insbesondere p_{R} < 0,3 · p_{W}, insbesondere p_{R} < 0,1 · p_{W}.

12. Verfahren gemäß einem der vorstehenden Ansprüche, **dadurch gekennzeichnet, dass** die Reaktionsbeschleunigersubstanz (8) bei einer Temperatur von höchstens 50 °C eine Mischungslücke mit dem Wasserstoffträgermedium (9) aufweist.

13. Verfahren gemäß einem der vorstehenden Ansprüche, **dadurch gekennzeichnet, dass** die Reaktionsbeschleunigersubstanz (8) als Feststoff vorliegt, wobei das Katalysatormaterial (7) insbesondere direkt auf der Reaktionsbeschleunigersubstanz (8) abgeschieden ist.

## Claims

1. A method for dehydrogenating a hydrogen carrier medium, comprising the method steps of
- providing
-- a metal-containing catalyst material (7),
-- an at least partially loaded hydrogen carrier medium (9),
-- a metal-free reaction accelerator substance (8),
- transferring hydrogen from the hydrogen carrier medium (9) to the reaction accelerator substance (8) by means of the metal-containing catalyst material (7),
- releasing hydrogen gas (16) from the reaction accelerator substance (8) by means of the metal-containing catalyst material (7),
wherein the reaction accelerator substance (8) has at least one functional group which contains oxygen and/or nitrogen.

2. The method as claimed in claim 1, **characterized by** a reaction pressure (p) of from 0.001 bar to 50 bar, in particular of from 0.3 bar to 20 bar, in particular of from 0.8 bar to 3 bar and in particular of less than 0.1 bar.

3. The method as claimed in either of the preceding claims, **characterized by** a reaction temperature (T) of from 25°C to 400°C, in particular of from 60°C to 250°C, in particular of from 80°C to 220°C and in particular of less than 100°C.

4. The method as claimed in any of the preceding claims, **characterized by** a release rate of at least 10 standard liters of hydrogen per liter of catalyst volume and per minute at a reaction temperature (T) of less than 250°C.

5. The method as claimed in any of the preceding claims, **characterized in that** the reaction accelerator substance (8) in the hydrogen-enriched form comprises secondary alcohols of the form

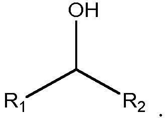

6. The method as claimed in any of the preceding claims, **characterized in that** the reaction accelerator substance (8) in the hydrogen-enriched form comprises oligovinyl alcohols of the form 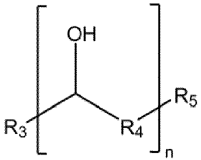 and/or polyvinyl alcohols of the form

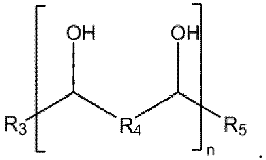

7. The method as claimed in any of the preceding claims, **characterized in that** the reaction accelerator substance (8) in the hydrogen-enriched form comprises secondary amines of the form

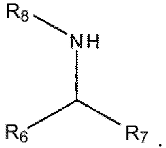

8. The method as claimed in any of the preceding claims, **characterized in that** the reaction accelerator substance (8) in the hydrogen-enriched form comprises oligovinylamines and/or polyvinylamines of the form

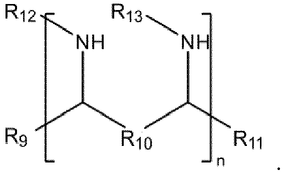

9. The method as claimed in any of the preceding claims, **characterized in that** the reaction accelerator substance (8) in the hydrogen-enriched form comprises a dehydro-genatable heteroalicyclic compound of the form 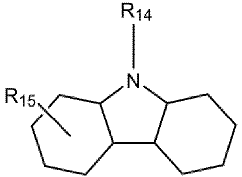 or of the form 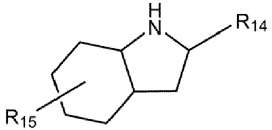 or of the form 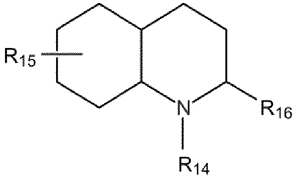 or of the form 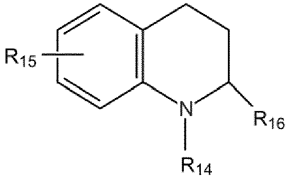 or of the form

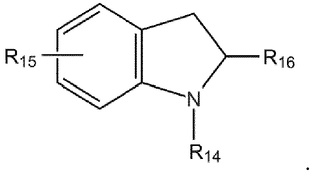

10. The method as claimed in any of the preceding claims, **characterized in that** the reaction accelerator substance (8) has a vapor pressure (p_{R}) which is greater than the vapor pressure (pw) of the hydrogen carrier medium (9), wherein in particular p_{R} > 1.5 p_{W}, in particular p_{R} > 2.0 p_{W}, in particular p_{R} > 5.0 p_{W}, in particular p_{R} > 10.0 p_{W}.

11. The method as claimed in any of claims 1 to 9, **characterized in that** the reaction accelerator substance (8) has a vapor pressure (p_{R}) which is lower than the vapor pressure (p_{W}) of the hydrogen carrier medium (9), wherein in particular p_{R} < 0.8 p_{W}, in particular p_{R} < 0.6 p_{W}, in particular p_{R} < 0.3 p_{W}, in particular p_{R} < 0.1 p_{W}.

12. The method as claimed in any of the preceding claims, **characterized in that** the reaction accelerator substance (8) has a miscibility gap with the hydrogen carrier medium at a temperature of at most 50°C.

13. The method as claimed in any of the preceding claims, **characterized in that** the reaction accelerator substance (8) is present as a solid, the catalyst material (7) in particular having been deposited directly onto the reaction accelerator substance (8).

## Revendications

1. Procédé de déshydrogénation d'un milieu porteur d'hydrogène comprenant les étapes de procédé
- préparation
-- d'un matériau catalytique (7) contenant un métal,
-- d'un milieu porteur d'hydrogène (9) au moins partiellement chargé (9),
-- d'une substance accélératrice de réaction (8) exempte de métal,
- transfert d'hydrogène à partir du milieu porteur d'hydrogène (9) sur la substance accélératrice de réaction (8) au moyen du matériau catalytique (7) contenant un métal,
- libération de l'hydrogène gazeux (16) à partir de la substance accélératrice de réaction (8) au moyen du matériau catalytique (7) contenant un métal,
dans lequel la substance accélératrice de réaction (8) présente au moins un groupement fonctionnel qui contient de l'oxygène et/ou de l'azote.

2. Procédé selon la revendication 1, **caractérisé par** une pression de réaction (p) de 0,001 bar à 50 bar, en particulier de 0,3 bar à 20 bar, en particulier de 0,8 bar à 3 bar et en particulier inférieure à 0,1 bar.

3. Procédé selon l'une des revendications précédentes, **caractérisé par** une température de réaction (T) de 25 °C à 400 °C, en particulier de 60 °C à 250 °C, en particulier de 80 °C à 220 °C et en particulier inférieure à 100 °C.

4. Procédé selon l'une des revendications précédentes, **caractérisé par** un taux de libération d'au moins 10 normo litres d'hydrogène par litre, volume de catalyseur et minute pour une température de réaction (T) inférieure à 250 °C.

5. Procédé selon l'une des revendications précédentes, **caractérisé en ce que** la substance accélératrice de réaction (8) dans la forme enrichie en hydrogène comprend des alcools secondaires
selon

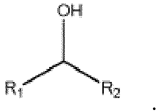

6. Procédé selon l'une des revendications précédentes, **caractérisé en ce que** la substance accélératrice de réaction (8) dans la forme enrichie en hydrogène comprend des alcools oligovinyliques
selon 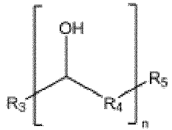 et/ou des alcools polyvinyliques selon

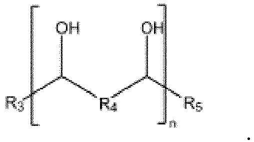

7. Procédé selon l'une des revendications précédentes, **caractérisé en ce que** la substance accélératrice de réaction (8) dans la forme enrichie en hydrogène comprend des amines secondaires
selon

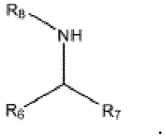

8. Procédé selon l'une des revendications précédentes, **caractérisé en ce que** la substance accélératrice de réaction (8) dans la forme enrichie en hydrogène comprend des oligovinylamines et/ou des polyvinylamines
selon

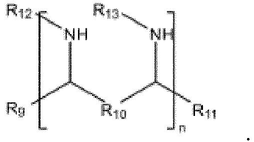

9. Procédé selon l'une des revendications précédentes, **caractérisé en ce que** la substance accélératrice de réaction (8) dans la forme enrichie en hydrogène comprend un composé hétéro alicyclique déshydrogénable selon 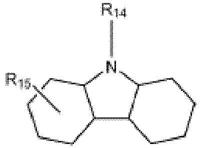 ou selon 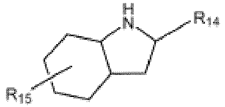 ou selon 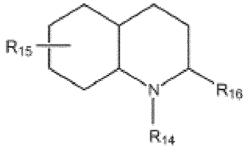 ou selon 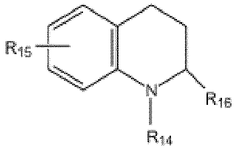 ou selon

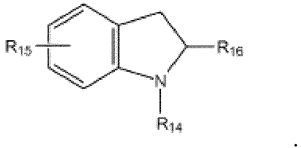

10. Procédé selon l'une des revendications précédentes, **caractérisé en ce que** la substance accélératrice de réaction (8) présente une pression de vapeur (p_{R}) qui est supérieure à la pression de vapeur (p_{W}) du milieu porteur d'hydrogène (9), où, en particulier p_{R} > 1,5 · p_{w}, en particulier p_{R} > 2,0 · p_{w}, en particulier P_{R} > 5,0 · p_{w}, en particulier p_{R} > 10,0 · p_{w}.

11. Procédé selon l'une des revendications 1 à 9, **caractérisé en ce que** la substance accélératrice de réaction (8) présente une pression de vapeur (P_{R}) qui est inférieure à la pression de vapeur (p_{W}) du milieu porteur d'hydrogènes (9), où, en particulier p_{R} < 0,8 · p_{w}, en particulier P_{R} < 0,6 · p_{w}, en particulier p_{R} < 0,3 · p_{w}, en particulier p_{R} < 0,1 · p_{w}.

12. Procédé selon l'une des revendications précédentes, **caractérisé en ce que** la substance accélératrice de réaction (8), pour une température d'au maximum 50 °C, présente une lacune de miscibilité avec le milieu porteur d'hydrogène (9).

13. Procédé selon l'une des revendications précédentes, **caractérisé en ce que** la substance accélératrice de réaction (8) est présente sous forme solide, dans lequel le matériau catalytique (7) est en particulier directement séparé sur la substance accélératrice de réaction (8).
